(19) **Europäisches Patentamt / European Patent Office / Office européen des brevets**

(11) **EP 4 495 148 A1**

(12) ## EUROPEAN PATENT APPLICATION

(43) Date of publication:
**22.01.2025 Bulletin 2025/04**

(21) Application number: **23187031.2**

(22) Date of filing: **21.07.2023**

(51) International Patent Classification (IPC):
**C08F 210/06** (2006.01)     **C08F 4/654** (2006.01)
**C08L 23/12** (2006.01)     **C08K 5/098** (2006.01)

(52) Cooperative Patent Classification (CPC):
(C-Sets available)
**C08F 210/06**                                    (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Borealis AG**
**1020 Vienna (AT)**

(72) Inventors:
• **CARMELI, Enrico**
**4021 Linz (AT)**
• **WANG, Jingbo**
**4021 Linz (AT)**

• **GAHLEITNER, Markus**
**4021 Linz (AT)**
• **KAYNAK, Baris**
**4021 Linz (AT)**
• **GRUENBERGER, Manfred**
**4021 Linz (AT)**
• **CAVACAS, Paulo**
**3140-166 Coutada (PT)**
• **BOXUS, Emmanuel**
**3583 Beringen (BE)**

(74) Representative: **Borealis AG**
**Borealis Polyolefine GmbH**
**IPR-Department**
**St.-Peter-Straße 25**
**4021 Linz (AT)**

(54) **POLYPROPYLENE COMPOSITIONS WITH IMPROVED SEALING AND BARRIER PROPERTIES**

(57)     The present invention pertains to a polypropylene composition comprising:
a) a propylene-ethylene random copolymer in an amount of from 95 to 100 wt.-% based on the total weight of the polypropylene composition, and
b) optionally, additives in an amount of from 0 to 5 wt.-% based on the total weight of the polypropylene composition;
wherein the polypropylene composition has:
- a melt flow rate $MFR_2$, as determined in accordance with ISO 1133 at 230 °C under a load of 2.16 kg, of from 0.5 to 15.0 g/10 min;
- a xylene cold soluble (XCS) content, as determined in accordance with ISO 16152, of from 0.1 to 7.0 wt.-%;
- an ethylene content, as determined by $^{13}C$-NMR spectroscopy, of from 0.1 to 5.0 wt.-%;
- a melting temperature Tm, as determined in accordance with ISO 11357 / part 3 / method C2, of from 155 to 175 °C; and
- a crystallization temperature Tc, as determined in accordance with ISO 11357 / part 3 / method C2, of from 120 to 135 °C.

**EP 4 495 148 A1**

(52) Cooperative Patent Classification (CPC): (Cont.)

C-Sets
**C08F 210/06, C08F 2/001;**
**C08F 210/06, C08F 4/6492;**
**C08F 210/06, C08F 4/6546;**
**C08K 5/098, C08L 23/12;**
C08F 210/06, C08F 210/16, C08F 2500/12,
C08F 2500/27, C08F 2500/33, C08F 2500/34,
C08F 2500/35, C08F 2500/39, C08F 2500/26

**Description**

**Field of Invention**

The present invention pertains to a polypropylene composition comprising a propylene-ethylene random copolymer and optionally additives. The present invention further pertains to a process for obtaining such compositions, an article comprising such compositions and use of such articles in a pharmaceutical packaging.

**Background of Invention**

Following the current industry needs and trends, packaging in pharmaceutical industry is also heavily focused on providing easily recyclable packaging for products. In particular, pharmaceutical blister packaging has gained a special attention in the recent years in Europe, as in many of them the material on the blister side is polyvinyl chloride (PVC), polyvinylidene chloride (PvDC) or fluoropolymers, while the push-through closure is made of aluminum; which essentially prevents them from being mechanically recycled. Being on the market for many years, these structures do not really have an ideal design; for instance the aluminum layer has issues with sealing with PVC-based layer. An additional sealant layer must be present between those two layers in order to strengthen the sealing; which in the end causes the recycling to be even more complicated, and increases costs for production. In addition, the limited moisture barrier of PVC makes it also a less-attractive material for pharmaceutical blister packaging, since it becomes challenging to preserve the content in the packaging free from any contamination.

Different solutions for blister packaging focusing on improving different properties have been extensively studied in the art. For instance, US 2020/0399037 A1 discloses a multi-layer structure suitable for being used in blister packaging applications. This document aims to solve the moisture penetration-related issues linked to blister packaging materials, and for that purpose discloses the multi-layer structure as comprising, in the following order, a first polymeric layer which can be a metallized polyethylene terephthalate (PET), a first tie layer which can be an adhesive lacquer, a second polymeric layer which can be a cyclic olefin or homopolymer of chlorotrifluoroethylene, a second tie layer which can be an adhesive lacquer, and a third polymeric layer which can comprise polypropylene or PVC. However, such a structure will definitely have issues when mechanically recycled, and it requires a lamination process in production making the final product significantly more expensive.

Document EP 0570188 B2, on the other hand, discloses use of a sheet as a blister package or a press-through pack (PTP) and aims at solving the moisture-barrier related issues. However, the blister package or PTP comprises a layer made of at least one non-crystalline polyolefin resin, being a cycloolefin copolymer, and possible a crystalline polyolefin resin with a crystallinity as determined according to X-ray diffraction method higher than 10%. While the respective sheets have a high moisture barrier, their thermal stability is limited by the low glass transition temperature of the employed non-crystalline polyolefin.

Hence, the need to obtain a film based on a polymer exhibiting improved mechanical, optical, barrier and sealing properties still remains. The present invention solves the above-indicated problems and achieves the mentioned improved properties thanks to the polymer composition disclosed herein.

**Summary of Invention**

The present invention pertains to a polypropylene composition comprising:

a) a propylene-ethylene random copolymer in an amount of from 95 to 100 wt.-% based on the total weight of the polypropylene composition, and

b) optionally, additives in an amount of from 0 to 5 wt.-% based on the total weight of the polypropylene composition;

wherein the polypropylene composition has:

- a melt flow rate $MFR_2$, as determined in accordance with ISO 1133 at 230 °C under a load of 2.16 kg, of from 0.5 to 15.0 g/10 min;

- a xylene cold soluble (XCS) content, as determined in accordance with ISO 16152, of from 0.1 to 7.0 wt.-%;

- an ethylene content, as determined by $^{13}$C-NMR spectroscopy, of from 0.1 to 5.0 wt.-%;

- a melting temperature Tm, as determined in accordance with ISO 11357 / part 3 / method C2, of from 155 to 175 °C;

and

- a crystallization temperature Tc, as determined in accordance with ISO 11357 / part 3 / method C2, of from 120 to 135 °C.

The present invention further pertains to a process for obtaining a polypropylene composition as described herein, in a multi-stage polymerization process comprising the steps of:

a) polymerizing propylene and ethylene in the presence of a Ziegler-Natta catalyst, in a first polymerization reactor (R1) and obtaining a first polymerization product;

b) transferring the first polymerization product to a second polymerization reactor (R2) and obtaining a final polymerization product; and

c) optionally, compounding the final polymerization product obtained in step b) with additives.

The present invention further pertains to an article, preferably a film, comprising a polymer composition as described herein.

The present invention further pertains to a use of an article as described herein in a pharmaceutical packaging.

**Detailed Description**

All the terms used herein are to be understood in their general meaning known to the skilled person in the art.

Polypropylene composition

The present invention relates to a polypropylene composition, comprising a propylene-ethylene random copolymer in an amount of from 95 to 100 wt.-%, preferably from 97 to 100 wt.-%, more preferably from 98.5 to 100 wt.-% and optionally additives in an amount of from 0 to 5 wt.-%, preferably from 0 to 3 wt.-%, more preferably from 0 to 1.5 wt.-%, based on the total weight of the polypropylene composition.

The polypropylene composition according to the present invention has a melt flow rate $MFR_2$, as determined in accordance with ISO 1133 at 230 °C under a load of 2.16 kg, of from 0.5 to 15.0 g/10 min. The preferred melt flow rate $MFR_2$, as determined in accordance with ISO 1133 at 230 °C under a load of 2.16 kg, of the polypropylene composition ranges from 1.0 to 10.0 g/10 min, more preferably from 2.0 to 10.0 g/10 min, most preferably from 3.0 to 7.0 g/10 min.

The polypropylene composition according to the present invention further has a xylene cold soluble (XCS) content, as determined in accordance with ISO 16152, of from 0.1 to 7.0 wt.-%, preferably from 0.5 to 5.0 wt.-%, more preferably from 1.0 to 3.0 wt.-%. It is particularly preferred when the polypropylene composition has a melt flow rate $MFR_2$, as determined in accordance with ISO 1133 at 230 °C under a load of 2.16 kg, of from 1.0 to 10.0 g/10 min, more preferably from 2.0 to 10.0 g/10 min, most preferably 3.0 to 7.0 g/10 min and a xylene cold soluble (XCS) content, as determined in accordance with ISO 16152, of from 0.5 to 5.0 wt.-%, more preferably from 1.0 to 3.0 wt.-%.

Further, the polypropylene composition according to the present invention has an ethylene content, as determined by $^{13}$C-NMR spectroscopy, of from 0.1 to 5.0 wt.-%, preferably from 0.2 to 3.0 wt.-%, more preferably from 0.5 to 1.0 wt.-%.

The polypropylene composition of the present invention as described herein has a melting temperature Tm, as determined in accordance with ISO 11357 / part 3 / method C2, of from 155 to 175 °C, preferably from 160 to 170 °C. In addition, the polypropylene composition has a crystallization temperature Tc, as determined in accordance with ISO 11357 / part 3 / method C2, of from 120 to 135 °C, preferably from 122 to 130 °C. It is particularly preferred when the propylene composition of the present invention as described herein has a melting temperature Tm, as determined in accordance with ISO 11357 / part 3 / method C2, of from 160 to 170 °C, and a crystallization temperature Tc, as determined in accordance with ISO 113571 part 3 / method C2, of from 122 to 130 °C.

In a preferred embodiment, the polypropylene composition according to the present invention has a tensile modulus in machine direction, as determined in accordance with ISO 527-3 on a 300 $\mu$m cast film, of from 900 to 1900 MPa, more preferably from 1100 to 1800 MPa, and most preferably from 1300 to 1700 MPa.

It is also preferred when the polypropylene composition has a haze value, as determined in accordance with ASTM D1003 on a 300 $\mu$m cast film, of from 0 to 40%, more preferably from 0 to 35%, and most preferably from 0 to 30%; and/or a crystallinity value, as determined by wide-angle X-ray scattering (WAXS) on a 300 $\mu$m cast film, of from 20 to 100%, more preferably from 50 to 90%, and most preferably from 60 to 80%. Such a haze value is particularly preferred, since a more transparent film will allow the content of the blister packaging to be more visible, hence such a haze range makes the polypropylene composition according to the present invention beneficial to be used in a blister packaging. Crystallinity, on the other hand, is a significant parameter as it is linked to the final stiffness of an article made of the polypropylene composition, which is one of the main mechanical property investigated for a blister packaging.

It is further preferred when the polypropylene composition has a low water vapor transmission rate (WVTR), as determined in accordance with ISO 15106-3:2003 on a 300 $\mu$m cast film, in order to keep the content of the blister packaging away from contaminants, in this case water vapor, and it preferably ranges from 0 to 1.0 g/m$^2$day, more preferably from 0.10 to 0.75 g/m$^2$day, and most preferably from 0.20 to 0.55 g/m$^2$day. It is particularly preferred when the propylene composition of the present invention as described herein has a haze value, as determined in accordance with ASTM D1003 on a 300 $\mu$m cast film, of from 0 to 35% and a low water vapor transmission rate (WVTR), as determined in accordance with ISO 15106-3:2003 on a 300 $\mu$m cast film, from 0.10 to 0.75 g/m$^2$day. Similarly, it is further preferred when the polypropylene composition has a low oxygen transmission rate (OTR), as determined in accordance with ASTM D 3985 on a 300 $\mu$m cast film, that is ranging from 50 to 300 cm$^3$/m$^2$day bar, more preferably from 150 to 260 cm$^3$/m$^2$day bar, and most preferably from 200 to 240 cm$^3$/m$^2$day bar.

It is further preferred when the polypropylene composition has good sealing performance when being sealed to an aluminium-based sheet for the push-through part of a blister package. Therefore, it is particularly preferred when the polypropylene composition according to the present invention has a sealing initiation temperature (SIT), as determined according to the procedure defined in the present application on a 300 $\mu$m cast film, of from 140 to 160 °C, more preferably from 145 to 155 °C. It is further preferred when the polypropylene composition according to the present invention has a sealing force, as determined at 150 °C according to the procedure defined in the present application on a 300 $\mu$m cast film, of from 4 to 15 N/cm, more preferably from 4.5 to 10 N/cm. It is further preferred when the polypropylene composition according to the present invention has a sealing force, as determined at 180 °C according to the procedure defined in the present application on a 300 $\mu$m cast film, of from 5 to 15 N/cm, more preferably from 6 to 10 N/cm.

Process

The present invention further relates to a process for obtaining a polypropylene composition as described herein, in a multi-stage polymerization process comprising the steps of:

a) polymerizing propylene and ethylene in the presence of a Ziegler-Natta catalyst, in a first polymerization reactor (R1) and obtaining a first polymerization product;

b) transferring the first polymerization product to a second polymerization reactor (R2) and obtaining a final polymerization product; and

c) optionally, compounding the final polymerization product obtained in step b) with additives. In a preferred embodiment, prior to step a) of the process described herein, a further step is conducted:
a0) modifying a Ziegler-Natta catalyst, preferably with a polymeric nucleating agent, more preferably with a vinyl polymer, and pre-polymerizing propylene in a pre-polymerization reactor.

The polymerization process of the polypropylene composition is conducted in a multi-stage polymerization as described hereinabove, preferably in a sequential polymerization process. The term "sequential polymerization" indicates that the propylene-ethylene random copolymer is produced in at least two reactors connected in series. Accordingly, the present polymerization system comprises at least a first polymerization reactor (R1) described in step a) and a second polymerization reactor (R2) as described in step b). The term "polymerization reactor" shall indicate that the main polymerization takes place. Thus, in case the process consists of two polymerization reactors, this definition does not exclude the option that the overall system comprises for instance a pre-polymerization step in a pre-polymerization reactor. The term "consist of" is only a closing formulation in view of the main polymerization reactors.

Preferably, at least one of the two polymerization reactors (R1) and (R2) is a gas phase reactor (GPR). It is more preferred that the second polymerization reactor (R2) is a gas phase reactor (GPR). A gas phase reactor (GPR) according to this invention is preferably a fluidized bed reactor, a fast fluidized bed reactor or a settled bed reactor or any combination thereof. Accordingly, the first polymerization reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

Preferably, the propylene-ethylene random copolymer of the first polymerization reactor (R1), i.e. fraction produced in the first polymerization reactor (R1), more preferably in the polymer slurry of the loop reactor (LR), is directly fed into the second polymerization reactor (R2), i.e. into the (first) gas phase reactor (GPR1), without a flash step between the stages. This kind of direct feed is described in EP 887379 A, EP 887380 A, EP 887381 A and EP 991684 A. By "direct feed" is meant a process wherein the content of the first polymerization reactor (R1), i.e. of the loop reactor (LR), the polymer slurry comprising the the first propylene ethylene random copolymer fraction, is led directly to the next stage gas phase reactor. Alternatively, the propylene ethylene random copolymer of the first polymerization reactor (R1), i.e. fraction produced in the first polymerization reactor (R1), may be also directed into a flash step or through a further concentration step before fed into the second polymerization reactor (R2), i.e. into the gas phase reactor (GPR). Accordingly, this "indirect feed" refers to a process wherein the content of the first polymerization reactor (R1), of the loop reactor (LR), i.e. the polymer slurry, is fed into the second polymerization reactor (R2), into the (first) gas phase reactor (GPR1), via a reaction medium separation unit and the reaction medium as a gas from the separation unit.

More specifically, the second polymerization reactor (R2) can be any mechanically mixed or fluid bed reactors. Preferably the gas phase reactors (GPRs) comprise a mechanically agitated fluid bed reactor with gas velocities of at least 0.2 m/sec. Thus it is appreciated that the gas phase reactor is a fluidized bed type reactor preferably with a mechanical stirrer. Thus, in a preferred embodiment the first polymerization reactor (R1) is a slurry reactor (SR), like loop reactor (LR), whereas the second polymerization reactor (R2) is gas phase reactor (GPR). Accordingly for the instant process two polymerization reactors (R1) and (R2), namely a slurry reactor (SR), like loop reactor (LR) and a (first) gas phase reactor (GPR1), connected in series are used. If needed prior to the slurry reactor (SR) a pre-polymerization reactor is placed.

The Ziegler-Natta catalyst (ZN-C) is fed into the first polymerization reactor (R1) and is transferred with the polymer (slurry) obtained in the first polymerization reactor (R1) into the subsequent reactors. If the process covers also a pre-polymerization step it is preferred that all of the Ziegler-Natta catalyst (ZN-C) is fed in the pre-polymerization reactor. Subsequently the pre-polymerization product containing the Ziegler-Natta catalyst (ZN-C) is transferred into the first polymerization reactor (R1).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315. A further suitable slurry-gas phase process is the Spheripol® process of Basell.

Especially good results are achieved in case the temperature in the reactors is carefully chosen.

Accordingly it is preferred that the operating temperature in the first polymerization reactor (R1) is in the range of 62 to 90 °C, more preferably in the range of 70 to 88 °C, still more preferably in the range of 75 to 85 °C.

Alternatively or additionally to the previous paragraph it is preferred that the operating temperature in the second polymerization reactor (R2) is in the range of 62 to 90 °C, more preferably in the range of 70 to 88 °C, still more preferably in the range of 75 to 85 °C. Typically the pressure in the first polymerization reactor (R1), preferably in the loop reactor (LR), is in the range from 2000 to 8000 kPa, preferably 3000 to 7000 kPa, like 3500 to 6500 kPa, whereas the pressure in the second polymerization reactor (R2), i.e. in the (first) gas phase reactor (GPR1), is in the range from 500 to 5000 kPa, preferably 1500 to 4000 kPa. Preferably hydrogen is added in each polymerization reactor in order to control the molecular weight, i.e. the melt flow rate $MFR_2$.

Preferably the average residence time is rather long in the polymerization reactors (R1) and (R2). In general, the average residence time ($\tau$) is defined as the ratio of the reaction volume ($V_R$) to the volumetric outflow rate from the reactor ($Q_o$) (i.e. $V_R/Q_o$), i.e $\tau = V_R/Q_o$ [tau = $V_R/Q_o$]. In case of a loop reactor the reaction volume ($V_R$) equals to the reactor volume. Accordingly the average residence time ($\tau$) in the first polymerization reactor (R1) is preferably at least 15 min, more preferably in the range of 15 to 80 min, still more preferably in the range of 20 to 60 min, like in the range of 24 to 50 min, and/or the average residence time ($\tau$) in the second polymerization reactor (R2) is preferably at least 70 min, more preferably in the range of 70 to 220 min, still more preferably in the range of 80 to 210 min, yet more preferably in the range of 90 to 200 min, like in the range of 90 to 190 min.

In the pre-polymerization reactor (PR) a polypropylene (Pre-PP) is produced. The pre-polymerization is conducted in the presence of the Ziegler-Natta catalyst (ZN-C). According to this embodiment the Ziegler-Natta catalyst (ZN-C), the co-catalyst (Co), and the external donor (ED) are all introduced to the pre-polymerization step. However, this shall not exclude the option that at a later stage for instance further co-catalyst (Co) and/or external donor (ED) is added in the polymerization process, for instance in the first reactor (R1). In one embodiment the Ziegler-Natta catalyst (ZN-C), the co-catalyst (Co), and the external donor (ED) are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 2000 to 8000 kPa, for example 2200 to 7000 kPa.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further, antistatic additive may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture (MI) of the Ziegler-Natta catalyst (ZN-C) and the polypropylene (Pre-PP) produced in the pre-polymerization reactor (PR) is obtained. Preferably the Ziegler-Natta catalyst (ZN-C) is (finely) dispersed in the polypropylene (Pre-PP). In other words, the Ziegler-Natta catalyst (ZN-C) particles introduced in the pre-polymerization reactor (PR) split into smaller fragments which are evenly distributed within the growing polypropylene (Pre-PP). The sizes of the introduced Ziegler-Natta catalyst (ZN-C) particles as well as of the obtained fragments are not of essential relevance for the instant invention and within the skilled knowledge.

As mentioned above, if a pre-polymerization is used, subsequent to said pre-polymerization, the mixture (MI) of the Ziegler-Natta catalyst (ZN-C) and the polypropylene (Pre-PP) produced in the pre-polymerization reactor (PR) is transferred to the first reactor (R1). Typically the total amount of the polypropylene (Pre-PP) in the final propylene ethylene copolymer is rather low and typically not more than 5.0 wt.-%, more preferably not more than 4.0 wt.-%, still more preferably in the range of 0.5 to 4.0 wt.-%, like in the range 1.0 of to 3.0 wt.-%.

As mentioned hereinabove, the Ziegler-Natta catalyst (ZN-C) may be modified in pre-polymerization step a0). The details of such modification are provided below.

Catalyst

In a preferred embodiment, the catalyst is a solid Ziegler-Natta catalyst comprising:

a) compounds of a transition metal of Group 4 to 6 of IUPAC;

b) a Group 2 of IUPAC metal compound;

c) an internal donor, that is a non-phthalic compound, preferably a non-phthalic ester;

d) a co-catalyst; and

e) optionally, an external donor.

The catalyst comprises compounds (TC) of a transition metal of Group 4 to 6 of IUPAC, like titanium, a Group 2 metal compound (MC), like a magnesium, and an internal donor (ID) being a non-phthalic compound, preferably a non-phthalic acid ester, still more preferably being a diester of non-phthalic dicarboxylic acids as described in more detail below. Thus, the catalyst is in a preferred embodiment fully free of undesired phthalic compounds. Further, the solid catalyst is free of any external support material, like silica or $MgCl_2$, but the catalyst is self-supported.

The Ziegler-Natta catalyst can be further defined by the way as obtained. Accordingly, the Ziegler-Natta catalyst is preferably obtained by a process comprising the steps of
a)

$a_1$) providing a solution of at least a Group 2 metal alkoxy compound (Ax) being the reaction product of a Group 2 metal compound (MC) and a monohydric alcohol (A) comprising in addition to the hydroxyl moiety at least one ether moiety optionally in an organic liquid reaction medium; or

$a_2$) a solution of at least a Group 2 metal alkoxy compound (Ax') being the reaction product of a Group 2 metal compound (MC) and an alcohol mixture of the monohydric alcohol (A) and a monohydric alcohol (B) of formula ROH, optionally in an organic liquid reaction medium; or

$a_3$) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; or

$a_4$) providing a solution of Group 2 alkoxide of formula $M(OR_1)_n(OR_2)_mX_{2-n-m}$ or mixture of Group 2 alkoxides $M(OR_1)_{n'}X_{2-n'}$ and $M(OR_2)_{m'}X_{2-m'}$, where M is Group 2 metal, X is halogen, $R_1$ and $R_2$ are different alkyl groups of $C_2$ to $C_{16}$ carbon atoms, and $0 \leq n < 2$, $0 \leq m < 2$ and $n+m+(2-n-m) = 2$, provided that both n and m $\neq 0$, $0 < n' \leq 2$ and $0 < m' \leq 2$; and

b) adding said solution from step a) to at least one compound (TC) of a transition metal of Group 4 to 6 and

c) obtaining the solid catalyst component particles,

and adding an internal electron donor (ID), preferably a non-phthalic internal donor (ID), at any step prior to step c).

The internal donor (ID) or precursor thereof is thus added preferably to the solution of step a) or to the transition metal compound before adding the solution of step a).

According to the procedure above the Ziegler-Natta catalyst (ZN-C) can be obtained via precipitation method or via emulsion- solidification method depending on the physical conditions, especially temperature used in steps b) and c). Emulsion is also called in this application liquid/liquid two-phase system.

In both methods (precipitation or emulsion-solidification) the catalyst chemistry is the same.

In precipitation method combination of the solution of step a) with at least one transition metal compound (TC) in step b) is carried out and the whole reaction mixture is kept at least at 50 °C, more preferably in the temperature range of 55 to 110 °C, more preferably in the range of 70 to 100 °C, to secure full precipitation of the catalyst component in form of a solid particles (step c).

In emulsion - solidification method in step b) the solution of step a) is typically added to the at least one transition metal compound (TC) at a lower temperature, such as from -10 to below 50 °C, preferably from -5 to 30 °C. During agitation of the emulsion the temperature is typically kept at -10 to below 40 °C, preferably from -5 to 30 °C. Droplets of the dispersed phase of the emulsion form the active catalyst composition. Solidification (step c) of the droplets is suitably carried out by heating the emulsion to a temperature of 70 to 150 °C, preferably to 80 to 110 °C.

The catalyst prepared by emulsion - solidification method is preferably used in the present invention.

In a preferred embodiment in step a) the solution of $a_2$) or $a_3$) are used, i.e. a solution of (Ax') or a solution of a mixture of (Ax) and (Bx), especially the solution of $a_2$).

Preferably the Group 2 metal (MC) is magnesium.

The magnesium alkoxy compounds as defined above can be prepared in situ in the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are glycol monoethers. Preferred alcohols (A) are $C_2$ to $C_4$ glycol mono-ethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched $C_2$-$C_{16}$ alkyl residue, preferably $C_4$ to $C_{10}$, more preferably C6 to $C_8$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 10:1 to 1:10, more preferably 6:1 to 1:6, most preferably 4.1 to 1:4.

Magnesium alkoxy compound may be a reaction product of alcohol(s), as defined above, and a magnesium compound selected from dialkyl magnesium, alkyl magnesium alkoxides, magnesium dialkoxides, alkoxy magnesium halides and alkyl magnesium halides. Further, magnesium dialkoxides, magnesium diaryloxides, magnesium aryloxyhalides, magnesium aryloxides and magnesium alkyl aryloxides can be used.Alkyl groups can be a similar or different $C_1$-$C_{20}$ alkyl, preferably $C_2$-$C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesium are used. Most preferred dialkyl magnesium are butyl octyl magnesium or butyl ethyl magnesium.

It is also possible that magnesium compound can react in addition to the alcohol (A) and alcohol (B) also with a polyhydric alcohol (C) of formula R" $(OH)_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and m is an integer of 2 to 6.

The magnesium alkoxy compounds of step a) are thus selected from the group consisting of magnesium dialkoxides, diaryloxy magnesium, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylene, pentane, hexane, heptane, octane and nonane. Hexanes and pentanes are particular preferred.

The reaction for the preparation of the magnesium alkoxy compound may be carried out at a temperature of 40 °C to 70 °C. Most suitable temperature is selected depending on the Mg compound and alcohol(s) used.

The transition metal compound of Group 4 to 6 is preferably a titanium compound, most preferably a titanium halide, like $TiCl_4$.

The internal donor (ID) used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilisers, like surfactants, which are used in a manner known in the art for facilitating the formation of and/or stabilise the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with an aromatic and/or aliphatic hydrocarbons, preferably with toluene, heptane or pentane and or with $TiCl_4$. Washing solutions can also contain donors and/or compounds of Group 13, like trialkyl aluminum, halogenated alky aluminum compounds or alkoxy aluminum compounds. Aluminum compounds can also be added during the catalyst synthesis. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100. Particles are compact with low porosity and have surface area below 20 $g/m^2$, more preferably below 10 $g/m^2$. Typically the amount of Ti is 1 to 6 wt.-%, Mg 10 to 20 wt.-% and donor 10 to 40 wt.-% of the catalyst composition.

Detailed description of preparation of catalysts is disclosed in WO 2012/007430, EP2610271, EP 2610270 and EP2610272.

The Ziegler-Natta catalyst (ZN-C) is preferably used in association with an alkyl aluminum cocatalyst and optionally external donors.

As further component in the instant polymerization process an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a_p R^b_q Si(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^3$ and $R^4$ are the same, yet more preferably both $R^3$ and $R^4$ are an ethyl group.

Especially preferred external donors (ED) are the pentyl dimethoxy silane donor (D-donor) or the cyclohexylmethyl dimethoxy silane donor (C-Donor).

In addition to the Ziegler-Natta catalyst (ZN-C) and the optional external donor (ED) a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Advantageously, the triethyl aluminium (TEAL) has a hydride content, expressed as $AlH_3$, of less than 1.0 wt.-% with respect to the triethyl aluminium (TEAL). More preferably, the hydride content is less than 0.5 wt.-%, and most preferably the hydride content is less than 0.1 wt.-%.

Preferably the ratio between the co-catalyst (Co) and the external donor (ED) [Co/ED] and/or the ratio between the co-catalyst (Co) and the transition metal (TM) [Co/TM] should be carefully chosen.

Accordingly, the mole ratio of co-catalyst (Co) to external donor (ED) [Co/ED] must be in the range of 5 to 45, preferably is in the range of 5 to 35, more preferably is in the range of 5 to 25; and optionally the mole ratio of co-catalyst (Co) to titanium compound (TC) [Co/TC] must be in the range of above 80 to 500, preferably is in the range of 100 to 350, still more preferably is in the range of 120 to 300.

As mentioned above the Ziegler-Natta catalyst (ZN-C) is preferably modified during the above described pre-polymerization step in order to introduce the polymeric nucleating agent. Details of such a modification can further be found in EP 1 183 307, EP 2 960 279 and EP 3 184 587.

Such a polymeric nucleating agent may be as described above a vinyl polymer, such as a vinyl polymer derived from monomers of the formula.

**CH2 = CH-CHR1R2**

wherein R1 and R2, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched C4-C30 alkane, C4-C20 cycloalkane or C4-C20 aromatic ring. Preferably R1 and R2, together with the C-atom wherein they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.

The weight ratio of vinyl compound to polymerization catalyst in the modification step of the polymerization catalyst preferably is 0.3 or more up to 40, such as 0.4 to 20 or more preferably 0.5 to 15, like 0.5 to 2.0.

The polymerization of the vinyl compound, e. g. VCH, can be done in any inert fluid that does not dissolve the polymer formed (e. g. polyVCH). It is important to make sure that the viscosity of the final catalyst/polymerized vinyl compound/inert fluid mixture is sufficiently high to prevent the catalyst particles from settling during storage and transport.

The adjustment of the viscosity of the mixture can be done either before or after the polymerization of the vinyl compound. It is, e. g., possible to carry out the polymerization in a low viscosity oil and after the polymerization of the vinyl compound the viscosity can be adjusted by addition of a highly viscous substance. Such highly viscous substance can be a "wax", such as an oil or a mixture of an oil with a solid or highly viscous substance (oil-grease). The viscosity of such a viscous substance is usually 1,000 to 15,000 cP at room temperature. The advantage of using wax is that the catalyst storing and feeding into the process is improved. Since no washing, drying, sieving and transferring are needed, the catalyst activity is maintained.

The weight ratio between the oil and the solid or highly viscous polymer is preferably less than 5:1.

In addition to viscous substances, liquid hydrocarbons, such as isobutane, propane, pentane and hexane, can also be used as a medium in the modification step..

The polypropylenes produced with a catalyst modified with polymerized vinyl compounds contain essentially no free (unreacted) vinyl compounds. This means that the vinyl compounds shall be completely reacted in the catalyst modification step. To that end, the weight ratio of the (added) vinyl compound to the catalyst should be in the range of 0.05 to 10, preferably less than 3, more preferably about 0.1 to 2.0, and in particular about 0.1 to 1.5. It should be noted that no benefits are achieved by using vinyl compounds in excess. Further, the reaction time of the catalyst modification by polymerization of a vinyl compound should be sufficient to allow for complete reaction of the vinyl monomer, i. e. the polymerization is continued until the amount of unreacted vinyl compounds in the reaction mixture (including the polymerization medium and the reactants) is less than 0.5 wt.-%, in particular less than 2000 ppm by weight (shown by analysis). Thus, when the prepolymerized catalyst contains a maximum of about 0.1 wt.-% vinyl compound, the final vinyl compound content in the polypropylene will be below the limit of determination using the GC-MS method ( < 0.01 ppm by weight). Generally, when operating on an industrial scale, a polymerization time of at least 30 minutes is required, preferably the polymerization time is at least I hour and in particular at least 5 hours. Polymerization times even in the range of 6 to 50 hours can be used. The modification can be done at temperatures of 10 to 70 °C, preferably 35 to 65 °C.

According to the invention, nucleated high-stiffness propylene polymers are obtained when the modification of the catalyst is carried out in the presence of strongly coordinating external donors.

General conditions for the modification of the catalyst are also disclosed in WO 00/6831, incorporated herein by reference with respect to the modification of the polymerization catalyst.

The preferred embodiments as described previously in the present application with respect to the vinyl compound also apply with respect to the polymerization catalyst of the present invention and the preferred polypropylene composition in accordance with the present invention.

Suitable media for the modification step include, in addition to oils, also aliphatic inert organic solvents with low viscosity, such as pentane and heptane. Furthermore, small amounts of hydrogen can be used during the modification.

Additives

As mentioned hereinabove, the polypropylene composition may comprise additives in an amount of from 0 to 5 wt.-%, more preferably from 0 to 3 wt.-%, and most preferably from 0 to 1.5 wt.-%, based on the total weight of the polypropylene composition. Such additives may be selected from the group consisting of antioxidants, acid scavengers, stabilizers, fillers, colorants, nucleating agents, slip agents, anti-blocking agents and antistatic agents. These additives are generally commercially available and are described, for example, in "Plastic Additives Handbook", pages 871 to 873, 5th edition, 2001 of Hans Zweifel.

Article

The present invention further relates to an article, preferably a film, comprising the polymer composition as described herein in at least one layer. Such a film may have a thickness of from 100 to 500 $\mu$m and be an oriented or non-oriented blown or a cast film, non-oriented cast film being preferred. A more preferred thickness of the film ranges from 150 to 400 $\mu$m, like from 200 to 400 $\mu$m. Said film may be a multilayer film, like a two-layer film or a three-layer film, in which case the layer comprising the polymer composition as described herein is the main layer. According to a preferred embodiment, said film is a monolayer film.

In a preferred embodiment, the article, more preferably the film according to the present invention has a tensile modulus in machine direction, as determined in accordance with ISO 527-3 on a 300 $\mu$m cast film, of from 900 to 1900 MPa, more preferably from 1100 to 1800 MPa, and most preferably from 1300 to 1700 MPa.

It is also preferred when the article, more preferably the film according to the present invention has a haze value, as determined in accordance with ASTM D1003 on a 300 $\mu$m cast film, of from 0 to 40%, more preferably from 0 to 35%, and most preferably from 0 to 30%; and/or a crystallinity value, as determined by wide-angle X-ray scattering (WAXS) on a 300 $\mu$m cast film, of from 20 to 100%, more preferably from 50 to 90%, and most preferably from 60 to 80%. Such a haze value is particularly preferred, since a more transparent film will allow the content of the blister packaging to be more visible, hence such a haze range makes the polypropylene composition according to the present invention beneficial to be used in a blister packaging. Crystallinity, on the other hand, is a significant parameter as it is linked to the final stiffness of an article made of the polypropylene composition, which is one of the main mechanical property investigated for a blister packaging.

It is further preferred when the article, more preferably the film according to the present invention has a low water vapor transmission rate (WVTR), as determined in accordance with ISO 15106-3:2003 on a 300 $\mu$m cast film, in order to keep the content of the blister packaging away from contaminants, in this case water vapor, and it preferably ranges from 0 to 1.0 g/m$^2$day, more preferably from 0.10 to 0.75 g/m$^2$day, and most preferably from 0.20 to 0.55 g/m$^2$day. It is particularly preferred when the propylene composition of the present invention as described herein has a haze value, as determined in accordance with ASTM D1003 on a 300 $\mu$m cast film, of from 0 to 35% anda low water vapor transmission rate (WVTR), as determined in accordance with ISO 15106-3:2003 on a 300 $\mu$m cast film, from 0.10 to 0.75 g/m$^2$day. Similarly, it is further preferred when the article, more preferably the film according to the present invention has a low oxygen transmission rate (OTR), as determined in accordance with ASTM D 3985 on a 300 $\mu$m cast film, that is ranging from 50 to 300 cm$^3$/m$^2$day bar, more preferably from 150 to 260 cm$^3$/m$^2$day bar, and most preferably from 200 to 240 cm$^3$/m$^2$day bar.

It is further preferred when the when the article, more preferably the film according to the present invention has good sealing performance when being sealed to an aluminium-based sheet for the push-through part of a blister package Therefore, it is particularly preferred when the article, more preferably film, according to the present invention has a sealing initiation temperature (SIT), as determined according to the procedure defined in the present application on a 300 $\mu$m cast film, of from 140 to 160 °C, more preferably from 145 to 155 °C. It is further preferred when the article, more preferably film, according to the present invention has a sealing force, as determined at 150 °C according to the procedure defined in the present application on a 300 $\mu$m cast film, of from 4 to 15 N/cm, more preferably from 4.5 to 10 N/cm. It is further preferred when the article, more preferably film, according to the present invention has a sealing force, as determined at 180 °C according to the procedure defined in the present application on a 300 $\mu$m cast film, of from 5 to 15 N/cm, more preferably from 6 to 10 N/cm.

Use

The present invention further pertains to a use of, an article, more preferably a film as described herein, in a blister packaging like a pharmaceutical packaging, a food packaging or a non-food packaging, like a detergent or personal care packaging. Such blister packaging comprises a thermoformed element formed from the film according to the present invention, being the recipient for the packaged goods like tablets or capsules, and an aluminium-based sheet for the push-through part. The respective blister package is closed by sealing the flat parts of said thermoformed element formed from the film according to the present invention, to the aluminium-based sheet.

## A. MEASUREMENT METHODS

The properties of the polymers made in accordance with the present invention have been characterized according to the methods described herein, unless otherwise stated.

Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg.

Calculation of melt flow rate $MFR_2$ (230 °C) of the polymer fraction produced in the second polymerization reactor is carried out using the formula below:

$$MFR\ (B) = 10^{\left[\frac{\log(MFR(C))-w(A)x\log(MFR(A))}{w(B)}\right]}\ \ (I)$$

wherein

w(A) is the weight fraction in [wt.-%] and MFR(A) is melt flow rate $MFR_2$ (230 °C) in [g/10 min] of the first polymer fraction (A) obtained in the first polymerization reactor,

w(B) is the weight fraction in [wt.-%] and MFR(B) is melt flow rate $MFR_2$ (230 °C) in [g/10 min] of second polymer fraction (B) obtained in the second polymerization reactor,

MFR(C) is melt flow rate $MFR_2$ (230 °C) in [g/10 min] of the polymer obtained as a result of the second polymerization step (the final polymer, which comprises both fractions (A) and (B)).

Xylene Cold Soluble (XCS) Content

The amount of the polymer soluble in xylene was determined at 25 °C according to ISO 16152; 5th edition; 2005-07-01.

Ethylene (C2) Content

Quantitative nuclear-magnetic resonance (NMR) spectroscopy was used to quantify the comonomer content and comonomer distribution of the copolymers, specifically propene-co-ethylene copolymers. Quantitative $^{13}C\{^1H\}$ NMR spectra recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm selective excitation probe head at 125°C using nitrogen gas for all pneumatics. Approximately 200 mg of material was dissolved in 1,2-tetrachloroethane-$d_2$ (TCE-$d_2$) with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). This setup was chosen primarily for the high resolution and quantitative spectra needed for accurate ethylene content determination. Standard single-pulse excitation was employed without NOE, using an optimised tip angle, 1 s recycle delay and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 6144 (6k) transients were acquired per spectra. Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to regio irregular propene insertion were observed (Resconi, L., Cavallo, L., Fait, A., Piemontesi, F., Chem. Rev. 2000, 100, 1253).].

Characteristic signals corresponding to the incorporation of ethylene were observed (Cheng, H. N., Macromolecules 17, 1984, 1950). The comonomer content was calculated as the mole fraction or percent of incorporated ethylene with respect to all monomer in the copolymer using the method of Wang et. al. (Wang, W-J., Zhu, S., Macromolecules 33, 2000, 1157) through integration of multiple signals spanning the whole spectral $^{13}$C spectra. This analyze method was chosen for its robust nature and ability to account for the presence of regio-irregular propene insertion when needed. Integral regions were slightly adjusted to increase applicability across the whole range of encountered comonomer contents.

For systems where only isolated ethylene incorporation (PPEPP) was observed the method of Wang et. al. was modified to reduce the influence of non-zero integrals used to quantify higher order comonomer sequences. In such cases the term for the absolute ethylene content was determined based upon only

$$E = 0.5( S\beta\beta + S\beta\gamma + S\beta\delta + 0.5( S\alpha\beta + S\alpha\gamma))$$

or $E = 0.5( I_H + I_G + 0.5( I_C + I_D ))$ using the same notation as Wang et. al. (Wang, W-J., Zhu, S., Macromolecules 33, 2000, 1157). The term used for absolute propylene content (P) was not modified and the mole fraction of ethylene calculated as

$$[E] = E / (E + P).$$

The comonomer content in weight percent was calculated from the mole fraction in the usual way i.e. [E wt.-%] = 100 * ( [E] * 28.06) / ( ([E] * 28.06) + ((1-[E]) * 42.08) ).

Melting Temperature Tm and Crystallization Temperature Tc

Melting temperature Tm and crystallization temperature Tc were measured using a TA Instrument Q2000 differential scanning calorimetry (DSC) on 5 to 7 mg samples. DSC was run according to ISO 11357 / part 3 / method C2 in a heat / cool / heat cycle with a scan rate of 10 °C/min in the temperature range of -30 to +225 °C.

Crystallization temperature Tc was determined from the cooling step, while melting temperature Tm was determined from the second heating step.

Molecular weight distribution

Molar mass averages (Mw and Mn) and molecular weight distribution (MWD), i.e. Mw/Mn, were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i / M_i)}$$

$$M_w = \frac{\sum_{i=1}^{N} (A_i \ x \ M_i)}{\sum A_i}$$

where Ai and Mi are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours at 160 °C under continuous gentle shaking in the autosampler of the GPC instrument.

Tensile Modulus

Tensile modulus in machine direction was determined in accordance with ISO 527-3 on 300 $\mu$m cast films.

Haze

Haze was determined in accordance with ASTM D1003 on 300 $\mu$m cast films.

Crystallinity from wide angle X-ray Scattering measurement (WAXS)

The measurement of wide-angle X-ray scattering (WAXS) of the samples was conducted by a Bruker D8 Discover apparatus. The diffractometer was equipped with an X-ray tube with a copper target operating at 30 kV and 20mA and a GADDS 2-D detector. A point collimation (0.5 mm) was used to direct the beam onto the surface. The measurement was done in reflection geometry, and 2θ angle in the range from 10° to 32.5° were measured. Data were collected for 300 s. Intensity vs. 2-theta curve was acquired with the same measurement parameters on an amorphous polypropylene sample, which was prepared by solvent extraction. An amorphous halo was obtained by smoothing the curve. The amorphous halo has been subtracted from the measured intensity vs. 2-theta curve to result in the crystalline curve.
The crystallinity index Xc can be defined by the area under the crystalline curve and the original spectrum using Challa, Hermans and Weidinger method [Challa F, Hermans PH, Weidinger A, Makromol. Chem. 56, 169 (1962)] as:

$$Xc = \frac{area\ under\ crystalline\ curve}{area\ under\ original\ spectrum} \times 100$$

Water Vapor Transmission Rate (WVTR)

Water vapour transmission rate (WVTR) was measured on 300 $\mu$m cast films in accordance with ISO 15106-3:2003.

Device: Mocon Aquatran

Temperature: 38° C $\pm$ 0.3°C.

Relative Humidity: 0/100% Area sample: 5 cm$^2$

Oxygen Transmission Rate (OTR)

Oxygen transmission rate (OTR) was measured on 300 $\mu$m cast films. The specimens were mounted as a sealed semi-barrier between two chambers at ambient atmospheric pressure. One chamber was slowly purged by a stream of nitrogen and hydrogen gas mixture (2% $H_2$ in $N_2$) at a given temperature and relative humidity and the other chamber was purged by a stream of oxygen at the same temperature and relative humidity as the $N_2$ stream. As oxygen gas permeated through the film into the nitrogen carrier gas, it was transported to the coulometric detector where it produced an electrical current, the magnitude of which is proportional to the amount of oxygen flowing into the detector per unit time. The oxygen transmission rate test was performed as per ASTM D 3985, at 23°C and 50% relative humidity and at 5°C and 0% relative humidity, with using 10 sccm of $N_2/H_2$ and O2 (99.999%) gases and a sheet surface area of 1 cm$^2$.

Sealing Properties

The heat-seal experiments were performed on at least 3 film specimens of 85 mm wide by 200 mm length cut in the machine direction, having 300 $\mu$m thickness. The 5 mm x 150 mm Teflon coated heating bars were set to different sealing temperatures. Two films were sealed by positioning, one on top of the other using a 0.5 s sealing time and 0.67 MPa pressure. The resulting sealed area was 85 mm x 5 mm. The specimens were then conditioned for 7 days ($\pm$ 24 h) at 23 °C ($\pm$ 2 °C) / 50 % RH ($\pm$ 10%). 10 specimens of 15 mm width were cut and tested in tensile mode at 23 °C ($\pm$ 2 °C) / 50 % RH ($\pm$ 10%) on a Universal Testing Machine (Zwick Z005) with a test speed of 200 mm/min.
Basic sealing:

- Film width: 85 mm
- Film length: > 200 mm

- Sealed seam width: 5 mm
- Sealing temperature: From 140 °C - 180 °C
- Sealing pressure: 0.67 N/mm$^2$
- Sealing time: 0.5 s
- Sealing jaws: Teflon coated

Conditioning:

- Conditioning time: 7 days ($\pm$ 24 h) at 23 °C ($\pm$ 2 °C) 150 % RH ($\pm$ 10%)

Heat seal strength:

- Test temperature: 23 °C ($\pm$ 2 °C) / 50 % RH ($\pm$ 10%)
- Specimen width: 15 mm
- Gripping distance: 100 mm
- Test speed: 200 mm/min

Test device: Universal Testing Machine

## B. EXAMPLES

Base polymer for IE1 was produced using a Ziegler-Natta catalyst (description is provided below), whose polymerization conditions are presented in Table 1. It was produced in a Borstar pilot plant with a pre-polymerization reactor, one slurry loop reactor and one gas phase reactor. The solid catalyst was used along with triethyl-aluminium (TEAL) as cocatalyst and dicyclo pentyl dimethoxy silane (D-donor) as donor.

*1a) Catalyst preparation*

3.4 liter of 2-ethylhexanol and 810 ml of propylene glycol butyl monoether (in a molar ratio 4/1) were added to a 20 l reactor. Then 7.8 liter of a 20 % solution in toluene of BEM (butyl ethyl magnesium) provided by Crompton GmbH was slowly added to the well stirred alcohol mixture. During the addition the temperature was kept at 10 °C. After addition the temperature of the reaction mixture was raised to 60 °C and mixing was continued at this temperature for 30 minutes. Finally, after cooling to room temperature the obtained Mg-alkoxide was transferred to storage vessel.

21.2 g of Mg alkoxide prepared above was mixed with 4,0 ml bis(2-ethylhexyl) citraconate for 5 min. After mixing the obtained Mg complex was used immediately in the preparation of catalyst component.

19.5 ml titanium tetrachloride was placed in a 300 ml reactor equipped with a mechanical stirrer at 25 °C. Mixing speed was adjusted to 170 rpm. 26.0 of Mg-complex prepared above was added within 30 minutes keeping the temperature at 25 °C . 3.0 ml of Viscoplex 1-254 and 24.0 ml of heptane were added to form an emulsion. Mixing was continued for 30 minutes at 25 °C. Then the reactor temperature was raised to 90 °C within 30 minutes. The reaction mixture was stirred for further 30 minutes at 90°C. Afterwards stirring was stopped and the reaction mixture was allowed to settle for 15 minutes at 90 °C.

The solid material was washed with 100 ml of toluene, with of 30 ml of TiCl4, with 100 ml of toluene and two times with 60 ml of heptane. l ml of donor was added to the two first washings. Washings were made at 80 °C under stirring 30 min with 170 rpm. After stirring was stopped the reaction mixture was allowed to settle for 20-30 minutes and followed by siphoning.

The solid material was washed 5 times: Washings were made at 80 °C under stirring 30 min with 170 rpm. After stirring was stopped the reaction mixture was allowed to settle for 20-30 minutes and followed by siphoning.

Wash 1: Washing was made with a mixture of 100 ml of toluene and 1 ml donor

Wash 2: Washing was made with a mixture of 30 ml of TiCl4 and 1 ml of donor.

Wash 3: Washing was made with 100 ml toluene.

Wash 4: Washing was made with 60 ml of heptane.

Wash 5. Washing was made with 60 ml of heptane under 10 minutes stirring.

Afterwards stirring was stopped and the reaction mixture was allowed to settle for 10 minutes decreasing the temperature to 70 °C with subsequent siphoning, and followed by N2 sparging for 20 minutes to yield an air sensitive powder.

*1b) VCH modification of catalyst*

35 ml of mineral oil (Paraffinum Liquidum PL68) was added to a 125 ml stainless steel reactor followed by 0.82 g of triethyl aluminium (TEAL) and 0.33 g of dicyclopentyl dimethoxy silane (donor D) under inert conditions at room temperature. After 10 minutes 5.0 g of the catalyst prepared in 1a (Ti content 1.4 wt.-%) was added and after additionally 20 minutes 5.0 g of vinylcyclohexane (VCH) was added.).The temperature was increased to 60 °C during 30 minutes and was kept there for 20 hours. Finally, the temperature was decreased to 20 °C and the concentration of unreacted VCH in the oil/catalyst mixture was analysed and was found to be 120 ppm weight.

Table 1. Polymerization conditions for base polymer of IE1

|  |  | IE1 |
|---|---|---|
| **Prepoly** |  |  |
| TEAL/Donor | mol/mol | 10 |
| TEAL/Ti | mol/mol | 200 |
| Temperature | °C | 30 |
| Pressure | kPa | 2500 |
| Residence time | min | 20 |
| **Loop (R1)** |  |  |
| Temperature | °C | 80 |
| Pressure | kPa | 5500 |
| Split | wt.-% | 60 |
| Feed H2/C3 | mol/kmol | 2.10 |
| Feed C2/C3 | mol/kmol | 0.80 |
| $MFR_2$ | g/10min | 3.8 |
| C2(Loop) | wt.-% | 0.65 |
| **GPR (R2)** |  |  |
| Temperature | °C | 80 |
| Pressure | kPa | 2800 |
| Split | wt.-% | 40 |
| Feed H2/C3 | mol/kmol | 15.4 |
| Feed C2/C3 | mol/kmol | 1.5 |
| $MFR_2$* | g/10min | 3.8 |
| $MFR_2$ (GPR1)** | g/10min | 3.8 |
| C2 (GPR1) | wt.-% | 0.65 |
| XCS | wt.-% | 2.2 |
| *calculated, **measured* |  |  |

Base polymer produced according to Table 1 was then mixed with different additives in an intensive mixer and IE1 was prepared in a co-rotating twin-screw extruder. Recipe and some of the properties measured on pellets are presented in Table 2, where AO1 is Irganox 1010 (supplied by BASF AG, DE), AO2 is Irgafos 168 (supplied by BASF AG, DE) and AS is Calcium stearate (Ceasit Fl supplied by Baerlocher, DE).

Table 2. Recipes and properties of compound prepared from IE1

| | | IE1 |
|---|---|---|
| Base polymer | wt.-% | 99.87 |
| AO1 | wt.-% | 0.03 |
| AO2 | wt.-% | 0.06 |
| AS | wt.-% | 0.04 |
| **Pellet** | | |
| $MFR_2$ | g/10min | 3.8 |
| Mw/Mn | - | 5.4 |
| XCS | wt.-% | 2.2 |
| C2 (total) | wt.-% | 0.65 |
| Tm | °C | 161 |
| Tc | °C | 125 |
| Tm-Tc | °C | 36 |

Comparative Example CE1 comprises DM55pharm as base polymer, which is a commercially available polypropylene homopolymer (sold by Borealis AG) with a melt flow rate $MFR_2$ of 2.8 g/10 min, a density of 905 $kg/m^3$ and a melting temperature Tm of 163 °C.

Cast films were prepared using IE1 and CE1 on a Collin lab scale cast film line with a melting temperature of 220 °C, chill roll temperature of 60 °C and throughput of 8 kg/h. In order to obtain a film of sufficient transparency, CE1 was also processed at an identical melt temperature with a chill roll temperature of 20 °C and throughput of 8 kg/h (CE2 in Table 3 below). The obtained thickness of the films were 300 μm. The films were then characterized, which is reported in Table 3 below.

Table 3. Film properties

| | | IE1 | CE1 | CE2 |
|---|---|---|---|---|
| **Tensile Modulus** | **MPa** | 1416 | 1026 | 849 |
| **Haze** | **%** | 26.9 | 43.5 | 28.8 |
| **Crystallinity, (Xc)** | **%** | 68 | 56 | 31 |
| **WVTR** | **$g/m^2$day** | 0.49 | 0.60 | 0.80 |
| **OTR** | **$cm^3/m^2$ day bar** | 210 | 247 | 322 |

It is evident from Table 3 that the film made of IE1 exhibits an improved stiffness and a lower haze, water vapor transmission rate and oxygen transmission rate compared to films made of CE1 and CE2.

Films of IE1 and CE2 were then thermally sealed with a standard aluminum film having a thickness of 20 μm (ALU 20MY H.M.FBL/GL.HS, supplied by Constantia) that is covered by a styrene elastomer lacquer film as sealing layer, as it is commonly used for push-through tablet blisters in the industry. This sealing process of the multilayer film structure was conducted on a length of 85 mm, and with sealing jaws width of 5 mm, sealing time of 0.5 s and pressure of 0.67 MPa. The sealing strength was tested as normally done for polymer/polymer sealings, finding a difference in both the sealing initiation and the strength at low sealing temperature. Sealing properties are reported in Table 4 below.

Table 4. Sealing properties of the multilayer films

| | | IE1 | CE2 |
|---|---|---|---|
| **SIT** | **°C** | 149 | 148 |
| **SF (150 °C)** | **N/cm** | 5.7 | 5.4 |
| **SF (180 °C)** | **N/cm** | 7.1 | 6.3 |

Sealing behavior of the inventive example IE1 is clearly improved in terms of sealing force at 150 and 180°C in relation to CE2, while also having better crystallinity, stiffness and barrier properties.

**Claims**

1. Polypropylene composition comprising:

   a) a propylene-ethylene random copolymer in an amount of from 95 to 100 wt.-% based on the total weight of the polypropylene composition, and
   b) optionally, additives in an amount of from 0 to 5 wt.-% based on the total weight of the polypropylene composition;

   wherein the polypropylene composition has:

   - a melt flow rate $MFR_2$, as determined in accordance with ISO 1133 at 230 °C under a load of 2.16 kg, of from 0.5 to 15.0 g/10 min;
   - a xylene cold soluble (XCS) content, as determined in accordance with ISO 16152, of from 0.1 to 7.0 wt.-%;
   - an ethylene content, as determined by $^{13}$C-NMR spectroscopy, of from 0.1 to 5.0 wt.-%;
   - a melting temperature Tm, as determined in accordance with ISO 11357 / part 3 / method C2, of from 155 to 175 °C; and
   - a crystallization temperature Tc, as determined in accordance with ISO 11357 / part 3 / method C2, of from 120 to 135 °C.

2. Polypropylene composition according to claim 1, having:

   a) a melt flow rate $MFR_2$, as determined in accordance with ISO 1133 at 230 °C under a load of 2.16 kg, of from 1.0 to 10.0 g/10 min, more preferably from 2.0 to 10.0 g/10 min, most preferably from 3.0 to 7.0 g/10 min; and/or
   b) a xylene cold soluble (XCS) content, as determined in accordance with ISO 16152, of from 0.5 to 5.0 wt.-%, more preferably from 1.0 to 3.0 wt.-%.

3. Polypropylene composition according to any of the preceding claims, having an ethylene content, as determined by $^{13}$C-NMR spectroscopy, of from 0.2 to 3.0 wt.-%, more preferably from 0.5 to 1.0 wt.-%.

4. Polypropylene composition according to any of the preceding claims, having a tensile modulus in machine direction, as determined in accordance with ISO 527-3 on a 300 $\mu$m cast film, of from 900 to 1900 MPa, more preferably from 1100 to 1800 MPa, and most preferably from 1300 to 1700 MPa.

5. Polypropylene composition according to any of the preceding claims, having:

   a) a haze value, as determined in accordance with ASTM D1003 on a 300 $\mu$m cast film, of from 0 to 40%, more preferably from 0 to 35%, and most preferably from 0 to 30%; and/or
   b) a crystallinity value, as determined by wide-angle X-ray scattering (WAXS) on a 300 $\mu$m cast film, of from 20 to 100%, more preferably from 50 to 90%, and most preferably from 60 to 80%.

6. Polypropylene composition according to any of the preceding claims, having a water vapor transmission rate (WVTR), as determined in accordance with ISO 15106-3:2003 on a 300 $\mu$m cast film, of from 0 to 1.0 g/m$^2$day, more preferably from 0.10 to 0.75 g/m$^2$day, and most preferably from 0.20 to 0.55 g/m$^2$day.

7. Polypropylene composition according to any of the preceding claims, having an oxygen transmission rate (OTR), as determined in accordance with ASTM D 3985 on a 300 $\mu$m cast film, of from 50 to 300 cm$^3$/m$^2$day bar, more preferably from 150 to 260 cm$^3$/m$^2$day bar, and most preferably from 200 to 240 cm$^3$/m$^2$day bar.

8. Polypropylene composition according to any of the preceding claims, having a sealing initiation temperature (SIT), as determined according to the procedure defined in the present application on a 300 $\mu$m cast film, of from 140 to 160 °C, more preferably from 145 to 155 °C.

9. A process for obtaining a polypropylene composition according to claims 1-8, in a multi-stage polymerization process

18

comprising the steps of:

a) polymerizing propylene and ethylene in the presence of a Ziegler-Natta catalyst, in a first polymerization reactor (R1) and obtaining a first polymerization product;
b) transferring the first polymerization product to a second polymerization reactor (R2) and obtaining a final polymerization product; and
c) optionally, compounding the final polymerization product obtained in step b) with additives.

10. Process according to claim 9, wherein the following step is carried out prior to step a):
a0) modifying a Ziegler-Natta catalyst, preferably with a polymeric nucleating agent, more preferably with a vinyl polymer, and pre-polymerizing propylene in a pre-polymerization reactor.

11. Process according to any of the claims 9-10, wherein the Ziegler-Natta catalyst comprises:

a) compounds of a transition metal of Group 4 to 6 of IUPAC;
b) a Group 2 of IUPAC metal compound;
c) an internal donor, that is a non-phthalic compound, preferably a non-phthalic ester;
d) a co-catalyst; and
e) optionally, an external donor.

12. An article, preferably a film, comprising a polypropylene composition according to claims 1-8.

13. Article according to claim 12, wherein the article is a blown or a cast film with a thickness of from 100 to 500 $\mu$m.

14. Use of, an article according to claims 12-13 in a pharmaceutical packaging.

EP 4 495 148 A1

## EUROPEAN SEARCH REPORT

**Application Number**

EP 23 18 7031

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 184 587 A1 (BOREALIS AG [AT]) 28 June 2017 (2017-06-28) * example IE1; tables 1-2 * * paragraph [0126] - paragraph [0127] * * paragraphs [0102], [0107] * * paragraphs [0011], [0033] * ----- | 1-5,9-14 | INV. C08F210/06 C08F4/654 C08L23/12 ADD. C08K5/098 |
| X | US 2012/015170 A1 (DOSHEV PETAR [AT] ET AL) 19 January 2012 (2012-01-19) * paragraph [0118]; example 3; table 1 * * paragraph [0106] - paragraph [0107] * * paragraph [0112] - paragraph [0113] * * paragraphs [0007], [0083] - [0086], [0089] * ----- | 1,2,4,5, 9-13 | |
| X | US 2020/207963 A1 (WANG JINGBO [AT] ET AL) 2 July 2020 (2020-07-02) * example CE1; table 2 * * paragraphs [0144], [0148] * * paragraph [0135] - paragraph [0136] * ----- | 1,2,4,5, 12,13 | |

**TECHNICAL FIELDS SEARCHED (IPC)**

C08F
C08L

The present search report has been drawn up for all claims

| Place of search | Date of completion of the search | Examiner |
|---|---|---|
| Munich | 12 January 2024 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**  EP 23 18 7031

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-2024

| Patent document cited in search report | | Publication date | Patent family member(s) | | Publication date |
|---|---|---|---|---|---|
| EP 3184587 | A1 | 28-06-2017 | CN | 109196042 A | 11-01-2019 |
| | | | EP | 3184587 A1 | 28-06-2017 |
| | | | KR | 20180082604 A | 18-07-2018 |
| | | | PT | 3184587 T | 02-06-2020 |
| | | | RU | 2712241 C1 | 27-01-2020 |
| | | | US | 2018362746 A1 | 20-12-2018 |
| | | | WO | 2017108643 A1 | 29-06-2017 |
| US 2012015170 | A1 | 19-01-2012 | AT | E523558 T1 | 15-09-2011 |
| | | | CN | 102695757 A | 26-09-2012 |
| | | | EP | 2281851 A1 | 09-02-2011 |
| | | | EP | 2449026 A1 | 09-05-2012 |
| | | | ES | 2368024 T3 | 11-11-2011 |
| | | | US | 2012015170 A1 | 19-01-2012 |
| | | | WO | 2011000557 A1 | 06-01-2011 |
| US 2020207963 | A1 | 02-07-2020 | BR | 112019027563 A2 | 07-07-2020 |
| | | | CN | 109790231 A | 21-05-2019 |
| | | | EA | 201992724 A1 | 04-06-2020 |
| | | | EP | 3645580 A1 | 06-05-2020 |
| | | | ES | 2935628 T3 | 08-03-2023 |
| | | | US | 2020207963 A1 | 02-07-2020 |
| | | | WO | 2019002346 A1 | 03-01-2019 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20200399037 A1
- EP 0570188 B2
- EP 887379 A
- EP 887380 A
- EP 887381 A
- EP 991684 A
- EP 0887379 A
- WO 9212182 A
- WO 2004000899 A
- WO 2004111095 A
- WO 9924478 A
- WO 9924479 A
- WO 0068315 A
- WO 2012007430 A
- EP 2610271 A
- EP 2610270 A
- EP 2610272 A
- EP 1183307 A
- EP 2960279 A
- EP 3184587 A
- WO 006831 A

### Non-patent literature cited in the description

- **HANS ZWEIFEL**. Plastic Additives Handbook. 2001, 871-873
- **SINGH, G.** ; **KOTHARI, A.** ; **GUPTA, V.** *Polymer Testing*, 2009, vol. 28 (5), 475
- **ZHOU, Z.** ; **KUEMMERLE, R** ; **QIU, X.** ; **REDWINE, D.** ; **CONG, R.** ; **TAHA, A.** ; **BAUGH, D** ; **WINNIFORD, B.** J. Mag. Reson. 2007, vol. 187, 225
- **BUSICO, V.** ; **CARBONNIERE, P.** ; **CIPULLO, R** ; **PELLECCHIA, R.** ; **SEVERN, J.** ; **TALARICO, G.** *Macromol. Rapid Commun*, 2007, vol. 28, 11289
- **RESCONI, L.** ; **CAVALLO, L.** ; **FAIT, A.** ; **PIEMONTESI, F.** *Chem. Rev.*, 2000, vol. 100, 1253
- **CHENG, H. N.** *Macromolecules*, 1950, vol. 17, 1984
- **WANG, W-J.** ; **ZHU, S.** *Macromolecules*, 2000, vol. 33, 1157
- **CHALLA F** ; **HERMANS PH** ; **WEIDINGER A**. *Makromol. Chem*, 1962, vol. 56, 169